# EUROPEAN PATENT SPECIFICATION

(11) **EP 3 555 025 B1**
(45) Date of publication and mention of the grant of the patent: **14.02.2024**
(21) Application number: 17825802.6
(22) Date of filing: 15.12.2017
(51) Int. Cl.: C05B 13/06, C03C 1/02, C05D 1/00, C05D 3/00, C05D 5/00, C05D 9/02, C03C 8/02

(54) **USE OF A PLANT PROTECTION PRODUCT IN THE FORM OF A FRIT**
BENUTZUNG EINER PFLANZENSCHUTZPRODUKT IN FORM EINER SINTERN
UTILISATION D'UN PRODUIT DE PROTECTION DES PLANTES SE PRÉSENTANT SOUS LA FORME D'UN FRITTAGE

(30) Priority: 19.12.2016 IT 201600127838
(43) Date of publication of application: 23.10.2019
(73) Proprietor: Sicer S.P.A., 41042 Fiorano Modenese (MO) (IT)
(72) Inventor: BRUNETTI, Palmiro, 06125 Perugia (IT); FERRARI, Giuliano, 41121 Modena (IT)
(74) Representative: Modiano, Micaela Nadia
(86) International application number: PCT/EP2017/083035
(87) International publication number: WO 2018/114671

(56) References cited:
- WO-A1-2016/132285
- WO-A2-2007/132497
- GB-A- 2 455 974
- US-B1- 6 199 317
- AZOOZ M A ET AL: "Preparation and application of some phosphoborosilicate glasses containing micronutrients as plant fertilisers", GLASS TECHNOLOGY - EUROPEAN JOURNAL OF GLASS SCIENCE AND TECHNOLOGY PART A,, vol. 47, no. 6, 1 December 2006 (2006-12-01), pages 164-171, XP001516570, ISSN: 1753-3546
- ZAID MOHD HAFIZ MOHD ET AL: "Comprehensive study on compositional dependence of optical band gap in zinc soda lime silica glass system for optoelectronic applications", JOURNAL OF NON-CRYSTALLINE SOLIDS, NORTH-HOLLAND PHYSICS PUBLISHING. AMSTERDAM, NL, vol. 449, 22 July 2016 (2016-07-22), pages 107-112, XP029699812, ISSN: 0022-3093, DOI: 10.1016/J.JNONCRYSOL.2016.07.020

## Description

The present invention relates to the use of a plant protection product in the form of a frit.

Plant protection products (also called agrochemicals, plant protection chemicals or "products for the protection of plants") are products, the function of which is to protect plant species from harmful substances and organisms (by preventing or combating their effects) or to influence the vital processes of the plant species (growth, reproduction etc.), or indeed to destroy and prevent the regrowth of unwanted plant species (weedkillers).

Among the most common diseases that strike plants (both arboreal species and herbaceous species) are iron chlorosis and biotic diseases.

In general, chlorosis manifests itself with a yellowing of the leaves and of the other green organs of the plants. It is not a disease as such; rather, it is a symptom of the lack of formation or insufficient formation of chlorophyll or its degradation. Chlorosis can be caused by both infectious and non-infectious diseases, such as nutritional deficiencies or surpluses; iron chlorosis, in particular, is due to a deficiency of iron available in the soil where the plant grows. The effects of chlorosis are particularly evident at leaf level; the leaves are smaller and are subject to early falling. Arboreal species are some of the plant species that are most sensitive to chlorosis.

Iron chlorosis is currently prevented and treated by adding inorganic salts based on iron, typically iron sulfate, or iron chelates, to the soil. The principal disadvantage of these compounds is the impossibility of varying the stoichiometry of their release in the soil; the solubility of these substances is almost impossible to modify, therefore the quantity of iron available in the soil, as well as the pH of the soil itself, cannot be modified. Furthermore, these compounds have a high cost and, for iron chelates, a suspected toxicity.

WO2007/132497A2 discloses a fertilizer compound having a glass matrix having a glass matrix having a percentage composition expressed by weight of phosphorus (as P₂O₅) in the range 2-45%, potassium (as K₂O) in the range 2-45%, other secondary nutrients (calcium, magnesium, sulphur and if necessary sodium) and trace elements.

WO2016/132285A1 discloses a fertilizing composition with a glass matrix useful as a supplement of trivalent chromium for the plants, mainly consisting of phosphoric anhydride P₂O₅ as a partial replacement of silica, of oxides modifier of this anhydride, i.e. in particular K₂O and CaO. and of trace elements, and further comprising trivalent chromium that, once assimilated by the plants, represents a valid supplement of trivalent chromium, an essential element in the diet of animals and humans.

Azooz M A et al.:"Preparation and application of some phosphoborosilicate glasses containing micronutrients as plant fertilisers"; GLASS TECHNOLOGY EUROPEAN JOURNAL OF GLASS SCIENCE AND TECHNOLOGY PART A, vol. 47, no.6, 1 December 2006 (2006-12-01), pages 164-171, discloses phosphoborosilicate glasses as fertilizers.

US6199317B1 discloses that vitreous, algae growing materials, release stably ferrous ions, over long periods of time. The duration of ion release can be controlled as desired by adjusting the particle size of the materials.

GB2455974A discloses a comminuted, heterogeneous boroncontaining compositions which may be prepared by heating to a temperature sufficiently high that calcination occurs but insufficient for the formation of a homogeneous melt a composition in particulate form comprising a mixture of components capable, under the conditions of heating, of yielding the oxides B₂0₃ and Si0₂ and optionally Al₂0₃, Na₂0 and/or CaO in proportions such that the relative percentages by weight of the said oxides, based on the total weight of said oxides, are 5 to 35% B₂0₃, 10 to 65% Si0₂, 0 to 35% Al₂0₃, 0 to 20% Na₂0, and 0 to 50% CaO.

Mohd Hafiz Mohf Zaid et al., "Comprehensive study on compositional dependence of optical band gap in zinc soda lime silica glass system for optoelectronic applications". Journal of Non-Crystallin Solids, Volume 449, 1 October 2016, pages 107-112, discloses a Zinc soda lime silica (ZnO-SLS) glass systems with composition x(ZnO)100-x(SLS) (x = 0. 10, 20, 30, 40 and 50 wt.%) synthesized by the conventional melt-quenching technique.

The term "biotic diseases" means diseases caused by biological agents such as viruses, bacteria, funguses or other microorganisms infesting plant species.

In order to treat biotic diseases, typically mineral salts are used, which comprise silicate, phosphate, phosphite or carbonate anions and sodium, potassium, ammonium or zinc cations. Owing to their high solubility in water, these salts do not remain in the soil for long, and it is therefore necessary to repeat their application on the soil at regular and short intervals, with consequent high costs.

The aim of the present invention is therefore to overcome the above mentioned limitations of the known art, by using a plant protection product that can be used both in the agriculture sector and in the nursery sector.

Within this aim, an object of the invention is to use a plant protection product for treating plants that makes it possible to control the kinetics of releasing the active ingredients into the soil; in particular, an object of the present invention is to use a plant protection product, a single application of which is effective during the entire vegetative time of the plants.

Another object of the invention is to use a plant protection product that, in addition to releasing active ingredients into the soil for treating plants, also makes it possible to correct any deficiencies of the soil, from the point of view of both chemism and pH.

A still further object of the invention is to use a plant protection product that is highly reliable and which can be provided with a process that is easy and low cost.

This aim and these and other objects which will become better apparent hereinafter are achieved by use of a frit for treating biotic diseases selected from the group consisting of: bacterial speck, bacterial canker, pith necrosis, bacterial spot, downy mildew, early blight, Septoria spot. Verticillium wilt. Pseudomonas spot. Xanthomonas spot, leaf spot, rot, bacterial necrosis, and mange, characterized in that it comprises:
(i) from 20% to 70% by weight on the weight of the frit of one or more network-forming compounds selected from the group consisting of: diphosphorus pentoxide (P₂O₅), silicon dioxide (SiO₂), diboron trioxide (B₂O₃), and sulfur trioxide (SO₃);
(ii) from 10% to 55% by weight on the weight of the frit of one or more network-modifying compounds selected from the group consisting of: aluminum oxide (Al₂O₃), magnesium oxide (MgO), calcium oxide (CaO), sodium oxide (Na₂O), potassium oxide (K₂O), and calcium fluoride (CaF₂);
(iii) from 20% to 60% by weight on the weight of the frit of one active compound consisting of zinc oxide (ZnO).

Further characteristics and advantages of the invention will become better apparent from the detailed description that follows.

Frits are vitreous compositions that comprise various substances, mainly oxides; they are formed by melting the substances that make them up, followed by a rapid cooling (typically in cold water), which results in the formation of a mass with a vitreous structure. Frits are widely used in the sector of ceramic decoration, enamels and inks.

In the agriculture sector, in the state of the art frits are known which act as fertilizing agents, capable of releasing micronutrients (Fe, B, Zn, P, K, Mn, Cu, Mo) into the soil; fertilizing frits were the subject of intense study between the 1950s and the 1980s, after which interest in them waned.

As noted, a first aspect of the invention relates to the use of a frit for treating biotic diseases selected from the group consisting of: bacterial speck, bacterial canker, pith necrosis, bacterial spot, downy mildew, early blight, Septoria spot, Verticillium wilt, Pseudomonas spot, Xanthomonas spot, leaf spot, rot, bacterial necrosis, and mange wherein said frit is characterized in that it comprises:
(i) from 20% to 70% by weight on the weight of the frit of one or more network-forming compounds selected from the group consisting of: diphosphorus pentoxide (P₂O₅), silicon dioxide (SiO₂), diboron trioxide (B₂O₃), and sulfur trioxide (SO₃);
(ii) from 10% to 55% by weight on the weight of the frit of one or more network-modifying compounds selected from the group consisting of: aluminum oxide (Al₂O₃), magnesium oxide (MgO), calcium oxide (CaO), sodium oxide (Na₂O), potassium oxide (K₂O), and calcium fluoride (CaF₂);
(iii) from 20% to 60% by weight on the weight of the frit of one active compound consisting of zinc oxide (ZnO).

In the context of the present invention, the function of the network-forming compounds (sometimes also called "constituents of the network") is to create the structure of the frit. Depending on which compounds are present and on their quantities, frits with a different structure are obtained. As is known to the person skilled in the art, the structure of the frit influences its solubility and contributes to determining the pH value of the soil treated with the frits. For example, a frit with a predominant content of SiO₂ is poorly soluble and lowers the pH of the soil; a frit with a predominant content of B₂O₃ is highly soluble and raises the pH of the soil. These trends however are not linear, in that they depend on other factors such as the concentration and the nature of other compounds present in the frit, for example the network modifiers.

In an embodiment of the present invention, the quantity of the one or more network-forming compounds can be comprised between 35% and 70% by weight on the weight of the frit. In a preferred embodiment, the quantity of the one or more network-forming compounds can be comprised between 20% and 60% by weight on the weight of the frit.

On the other hand, the function of the network-modifying compounds is to alter the network structure of the frit (which is inherently very regular, being a vitreous mass). In particular, the network-modifying compounds are located irregularly in the regular structure defined by the network-forming compounds, thus weakening the network structure. The result is a structure where the vitreous phase is reduced, with consequent increase of solubility; the weakening effect of the network structure is higher for Na₂O and K₂O, and lower for CaO and MgO.

In an embodiment of the present invention, the quantity of the one or more network-modifying compounds can be comprised between 20% and 55% by weight on the weight of the frit. In another embodiment, the quantity of the one or more network-modifying compounds can be comprised between 10% and 30% by weight on the weight of the frit.

The percentage ratios between network-forming compounds and network-modifying compounds determines the kinetics of releasing the compounds from the frit, i.e., in other words, the solubility in water of that frit. In detail, the higher the percentage of network-forming compounds with respect to the percentage of network-modifying compounds, the slower the kinetics of releasing the compounds from the frit (i.e. the solubility in water of the frit will be lower), and vice versa.

The solubility in water of the frits as used according to the invention, expressed as a percentage of dissolved frit after a time equal to 28 days, is comprised between 3% and 40%, according to the ratio (expressed as a percentage by weight) between network-forming compounds and network-modifying compounds; this ratio can be comprised between 0.5 and 4.

The release kinetics of the frits depends therefore on the combination (both in qualitative terms and in quantitative terms) of the compounds that make them up: an appropriate choice of such compounds and of the corresponding quantities makes it possible to control and vary the release kinetics of the various frits.

In addition to the composition of the frit, the release kinetics also depends on the physical characteristics of the frit proper, such as granulometry and specific surface.

The combination of the network-forming compounds and network modifiers also determines the value of the pH of the water that solubilizes the frit (and as a consequence the pH of the soil treated with the frit): in particular, B₂O₃, P₂O₅, SO₃, SiO₂ and CaF₂ lower pH, while Na₂O, K₂O and CaO increase pH. The solubilization of the frits as used according to the invention results in obtaining pH values (expressed as pH of the water solubilizing the frit) comprised between 4.5 and 9.

The active compounds are compounds that the plant protection action of the frit depends on: each active compound individually or several active compounds combined in the frit make it possible to oppose one or more plant diseases.

In an embodiment, the frit as used according to the invention can furthermore comprise one or more network-supporting compounds. The network-supporting compounds can be selected from the group consisting of: zirconium dioxide (ZrO₂), titanium dioxide (TiO₂), tin dioxide (SnO₂), cerium dioxide (CeO₂), yttrium oxide (Y₂O₃), lanthanum oxide (La₂O₃), divanadium pentoxide (V₂O₅), selenium dioxide (SeO₂) and antimony trioxide (Sb₂O₃).

The function of the network-supporting compounds is to optimize the formulation of the frit and its preparation, thus giving the frit particular conditions of oxidation, viscosity etc. The choice of supporting compounds therefore depends on the characteristics that it is desired to impart on the resulting frit. For example, oxides such as ZrO₂, TiO₂, Y₂O₃, SeO₂ modify the viscosity of the frit in the melting step, determine the formation of crystals and modify the ratio between the vitreous phase and the crystalline phase, in addition to modifying the solubility of the frit in water. Sb₂O₃ acts as a refining agent in the melting step, effecting a controlled release of oxygen in the melted material.

Preferably, the quantity of the one or more network-supporting compounds can be lower than or equal to 3% by weight on the weight of the frit.

The present disdosure, outside the subject-matter of the claims, relates to a process for providing the frits described herein; such process comprises the steps of:
(i) mixing the one or more network-forming compounds, the one or more network-modifying compounds and the one or more active compounds, forming a mixture;
(ii) melting the mixture of compounds obtained in step (i), thus obtaining a molten mass;
(iii) cooling the molten mass obtained in step (ii);
(iv) grinding the cooled mass obtained in step (iii).

In step (i), the one or more network-forming compounds, the one or more network-modifying compounds and the one or more active compounds can be mixed by a horizontal mixer.

In step (ii), the melting of the mixture of compounds can be done with a smelting furnace: the temperatures at which melting occurs can vary between 500°C and 1550°C.

In step (iii), the cooling of the molten mass can be done by pouring the mass into water or by rolling with rollers that are cooled internally with water.

In step (iv), the grinding of the cooled mass can be done by grinder rollers, toothed and/or smooth.

Once the grinding is finished, and therefore the frits are obtained, the frits can be subjected to granulometric classification, separating them on the basis of size. Such separation can be done for example with horizontal vibrating nutation sieves.

It should be understood that, if the frits as used according to the invention furthermore comprise one or more network-supporting compounds, these are mixed with the other ingredients in step (i) of the process. The presence of the network-supporting compounds has no impact on the conditions of carrying out the process described above.

Use of the frits as matrices for releasing substances in the agriculture sector and in the nursery sector also offers an ecological and economic advantage, since the process described above of melting the compounds and cooling the mass does not require the use of costly or polluting means and technologies. The costs of the final product are therefore lower than those of products for use in agriculture which are made in different forms.

Another aspect of the disclosure, outside the subjectmatter of the claims, relates to a composition that comprises one or more frits described herein. In the composition there can be, in addition to the one or more frits, other substances that can, for example, function as a carrier of the frits.

According to the present invention, the frits or the compositions that comprise the frits are used for treating plants affected, by the following biotic diseases: bacterial speck, bacterial canker, pith necrosis, bacterial spot, downy mildew, early blight, Septoria spot, Verticillium wilt, Pseudomonas spot, Xanthomonas spot, leaf spot, rot, bacterial necrosis, and mange.

The following table lists the pathogens that cause the biotic diseases given above; such diseases and the respective pathogens involved are known to the person skilled in the art.

| **Disease** | **Pathogen agent** |
|---|---|
| Bacterial speck | *Pseudomonas syringae* |
| Bacterial canker | *Clavibacter michiganensis* |
| | *Pseudomonas syringae pv. Actinidiae* |
| | *Pseudomonas avellanae* |
| Pith necrosis | *Pseudomonas mediterranea* |
| | *Pseudomonas corrugata* |
| Bacterial spot | *Xanthomonas spp.* |
| | *Xanthomonas campestris* |
| | *Pseudomonas syringae* |
| Downy mildew | *Phytophthora infestans* |
| | *Bremia lactucae* |
| | *Peronospora tabacina* |
| Early blight | *Alternaria spp.* |
| Septoria spot | *Septoria lycopersici* |
| Verticillium wilt | *Verticilliun albo-atrum* |
| Pseudomonas spot | *Pseudomonas syringae* |
| Xanthomonas spot | *Xanthomonas campestris* |
| Leaf spot | *Xanthomonas axonopodis* |
| Rot | *Xanthomonas axonopodis* |
| | *Botrytis cinerea* |
| | *Sclerotinia sclerotiorum* |
| Bacterial necrosis | *Xanthomonas campestris* |
| Mange | *Pseudomonas savastanoi* |

The plants affected by iron chlorosis or by biotic diseases which can draw benefit from treatment with the frits with plant protection action according to the invention or with compositions that comprise the frits can preferably be plants of commercial value, both ornamental plants and plants intended for food. More preferably, such plants can be for example selected from the group consisting of tomato, bean, lettuce, sweet pepper, tobacco, kiwi, hazel, olive, oleander, poinsettia.

Use of the frits of the invention entails that they be applied on the soil where the plants affected by iron chlorosis or by biotic diseases are cultivated. Application of the frits can be done by hand or with manurespreading machines directly onto the surface of the soil. Preferably, the quantities applied can vary from 50 g to 2000 g of frits per 1 m² of soil.

It should be understood that the characteristics of the embodiments described with reference to an aspect of the present invention are to be considered valid, where applicable, also with reference to the other aspects of the invention described herein, even if such characteristics have not been explicitly repeated.

Below are some examples of formulation of frits with plant protection action, used to treat some plant diseases; the percentages are expressed by weight on the weight of the frit. Obviously, the examples that follow should be considered as non limiting of the scope of the invention.

### EXAMPLE 1: frits for treating iron chlorosis (not according to the use of the present invention as claimed)

| | **Frit 1** | **Frit 2** | **Frit 3** | **Frit 4** |
|---|---|---|---|---|
| B₂O₃ | 3% | 27% | 27% | - |
| MgO | 11% | 2% | 5% | 6% |
| SiO₂ | 34% | 26% | 10% | 41% |
| SO₃ | 1% | 3% | 3% | 3% |
| P₂O₅ | - | - | 20% | 15% |
| K₂O | 16% | 14% | 8% | 8% |
| FeO | 22% | 22% | 22% | 22% |
| Fe₂O₃ | 3% | 3% | 3% | 3% |
| ZnO | 10% | 3% | 2% | 2% |
| Solubility in water after 28 days | 8% | 25% | 20% | 5% |
| pH value after 28 days | 8.5 | 5.1 | 5.5 | 5.7 |

As can be seen from the data, the frits for the treatment of iron chlorosis have a very different solubility in water after 28 days. Furthermore, the frits modify the pH of the soil where they are applied in an appreciably different manner, acidifying it or alkalizing it. Note therefore that, by acting on the formulation of the frits from a quantitative and/or qualitative point of view, it is possible to formulate frits with different characteristics, adapted therefore to treat soils and plants with different needs.

### EXAMPLE 2: frits with high iron content for treating iron chlorosis (not according to the use of the present invention as claimed)

From the preliminary results of iron available in the soil, and from visual analysis on lettuce plants (used as testers to assess the phytotoxicity, if any, of the frits), the following frits with high iron content have been tested by experimenting on plants that are sensitive to the lack of the iron micronutrient.

| | FRIT 5 | FRIT 6 | FRIT 7 |
|---|---|---|---|
| MgO | 3% | 4% | 2% |
| SiO₂ | 30% | 25% | - |
| P₂O₅ | 8% | 10% | 32% |
| K₂O | 13% | 15% | 15% |
| CaO | 5% | 6% | 3% |
| FeO | 41% | 40% | 48% |
| Solubility in water after 28 days | 5% | 8% | 10% |
| pH value after 28 days | 6 | 6.3 | 5.9 |

The experiment was conducted in a greenhouse, providing for 3/4 replications (to have statistical data) for each treatment: it consists of mixing soil poor in available-iron both with the frits 5, 6, 7 at different doses (0.5; 1; 2; 4 %), and with sequestrene (a product used widely in agriculture and constituted by iron chelate, highly soluble and therefore fast-acting) also at different doses (0.02; 0.04; 0.08 %).

Three plant species were transplanted into this soil treated with doses of frit, with sequestrene and "control" samples, i.e. soil with nothing added: kiwi (*Actinidia deliciosa A. Chev.* cultivar Hayward clone 8), aubergine (*Cucurbita pepo L.* cultivar Colosseo) and melon (*Cucumis melo L.* cultivar cantalupensis).

In the growth period, the plants were monitored visually and irrigated with distilled water and at the end of the cycle (variable depending on the plant species used), the iron content in the aerial part of the plants was analyzed, and the available-iron in the soil was analyzed.

Furthermore, to assess the release of iron over time by the frits, leaching tests were carried out.

With regard to the content of Fe available in the soil, the results showed a significant increase of the assimilable Fe concentration in the treated samples, both with sequestrene and with the frits 5, 6, 7 with respect to the control; furthermore, a dose effect was observed, i.e. an increase of available Fe with the increase of the doses made with the frits, while such effect was not observed in the plants that grew in the presence of increasing doses of sequestrene.

The influence of different doses of FRIT 5-6-7 and sequestrene on the content of Fe available in the soil originating from potted growing of kiwi plants (*Actinidia deliciosa A. Chev.* cultivar Hayward clone 8), aubergine (*Cucurbita pepo L.* cultivar Colosseo) and melon (*Cucumis melo L.* cultivar cantalupensis) at the 53rd, 21st and 21st day of growth, respectively can be seen in Table 1. The numbers in parentheses are standard deviations (n=3). For each column, averages with different letters differ significantly for values of *P* < 0.05.

**Table 1. Influence of different doses of FRIT 5-6-7 and sequestrene on the content of Fe available in the soil**

| Treatment | Dose | Kiwi | Aubergine | Melon |
|---|---|---|---|---|
| | % | ppm | | |
| FRIT 5 | 0.5 | - | 16.42 (0.50) ef | 26.15 (4.25) be |
| FRIT 5 | 1.0 | 25.67 (5.62) cd | 16.35 (1.49) ef | 19.21 (0.89) ef |
| FRIT 5 | 2.0 | 35.70 (2.91) ab | 30.36 (7.88) ad | 36.70 (2.35) a |
| FRIT 5 | 4.0 | 39.23 (5.16) ab | 36.66 (4.78) ac | 36.39 (0.91) ab |
| FRIT 6 | 0.5 | - | 22.02 (1.76) cf | 24.30 (0.62) bf |
| FRIT 6 | 1.0 | 31.53 (1.41) be | 34.44 (6.11) ad | 33.93 (4.28) ab |
| FRIT 6 | 2.0 | 31.75 (2.98) be | 40.01 (2.39) a | 35.79 (3.67) ab |
| FRIT 6 | 4.0 | 41.14 (4.79) ab | 44.23 (5.85) a | 28.76 (3.20) ae |
| FRIT 7 | 0.5 | - | 21.35 (2.74) df | 31.60 (2.63) ad |
| FRIT 7 | 1.0 | 38.87 (2.98) ab | 32.34 (5.42) ad | 23.51 (2.40) cf |
| FRIT 7 | 2.0 | 45.73 (5.70) a | 34.87 (1.81) ad | 23.23 (5.84) df |
| FRIT 7 | 4.0 | 42.24 (1.23) a | 36.99 (4.87) ab | 33.05 (3.30) ac |
| Sequestrene | 0.02 | 24.49 (2.11) cd | 13.78 (1.69) f | 16.58 (2.77) fg |
| Sequestrene | 0.04 | 24.76 (5.34) cd | 24.87 (3.54) be | 20.70 (1.03) ef |
| Sequestrene | 0.08 | 39.37 (2.67) ab | 33.04 (1.47) ad | 33.42 (2.11) ab |
| Control | 21.22 (3.08) d | 11.86 (3.40) f | 11.11 (0.63) g | |

In the aerial part of the plants analyzed, the iron contents were wholly similar and the differences were not statistically meaningful; one possible explanation of such absence of differences could be the already-satisfactory content of available iron in the starting soil, which is confirmed by the total absence of symptoms of leaf chlorosis in the controls.

The content of Fe in the leaves of kiwi plants (*Actinidia deliciosa A. Chev.* cultivar Hayward clone 8), aubergines (*Cucurbita pepo L.* cultivar Colosseo) and melons (*Cucumis melo L.* cultivar cantalupensis) grown for 53, 21 and 21 days respectively in soil with different doses of FRIT 5, 6, 7 and sequestrene is shown in Table 2. The numbers in parentheses are standard deviations (n=3). For each column, averages with different letters differ significantly for values of *P* < 0.05.

**Table 2. Content of Fe in the leaves of plants grown in soil with different - doses of FRIT 5, 6, 7 and sequestrene**

| Treatment | Dose | Kiwi | Aubergine | Melon |
|---|---|---|---|---|
| | % | ppm | | |
| FRIT 5 | 0.5 | | 87.86 (29.35) a | 103.46 (75.69) ab |
| FRIT 5 | 1.0 | 86.20 (9.80) a | 153.55 (42.45) a | 78.92 (15.87) ab |
| FRIT 5 | 2.0 | 83.20 (13.22) a | 79.15 (15.78) a | 86.06 (0.27) ab |
| FRIT 5 | 4.0 | 68.41 (15.03) a | 90.70 (15.81) a | 114.99 (53.95) a |
| FRIT 6 | 0.5 | | 73.17 (30.63) a | 80.25 (3.73) ab |
| FRIT 6 | 1.0 | 84.49 (12.34) a | 113.02 (90.93) a | 68.59 (10.79) ab |
| FRIT 6 | 2.0 | 82.77 (16.40) a | 73.40 (3.13) a | 66.88 (11.40) ab |
| FRIT 6 | 4.0 | 98.71 (19.07) a | 101.79 (28.78) a | 75.98 (12.23) ab |
| FRIT 7 | 0.5 | | 86.25 (16.87) a | 67.76 (14.15) ab |
| FRIT 7 | 1.0 | 67.74 (20.87) a | 77.75 (20.76) a | 66.68 (4.78) ab |
| FRIT 7 | 2.0 | 75.42 (7.18) a | 91.35 (24.05) a | 65.68 (11.04) ab |
| FRIT 7 | 4.0 | 80.48 (10.43) a | 120.07 (33.88) a | 58.62 (14.29) ab |
| Sequestrene | 0.02 | 100.65 (27.04) a | 128.85 (16.05) a | 64.82 (4.14) ab |
| Sequestrene | 0.04 | 113.58 (44.84) a | 98.56 (31.31) a | 73.19 (6.20) ab |
| Sequestrene | 0.08 | 66.64 (14.85) a | 123.13 (39.50) a | 72.70 (2.22) ab |
| Control | | 86.64 (27.74) a | 101.91 (26.68) a | 51.79 (8.69) b |

Leaching tests were carried out using samples of 200g of soils treated with the frits 5-6-7, of the soils treated with sequestrene and of the soils treated with a control. The soil samples were wetted up to complete saturation and after 24 hours a first leaching was carried out with 25 ml of distilled water. The leaching tests showed the absence of iron in the leachates of the soils treated with the frits 5-6-7 differently from the soils treated with sequestrene which showed a release of substantial quantities of soluble iron right from the first day of experimentation.

Table 3 shows the amount of iron released by samples of soils treated with the frits 5-6-7, of the soils treated with sequestrene and control, subjected to leaching with distilled water, as shown above. The content of iron was measured in samples of leachates of 12-14 ml.

**Table 3. Iron content (mg) in the leachates of the soils treated with the frits 5-6-7, of the soils treated with sequestrene and of the soils treated with a control**

| FRIT | % | Replication | **Day 1** | **Day 2** | **Day 4** | **Day 7** | **Day 11** | **Day 18** |
|---|---|---|---|---|---|---|---|---|
| FRIT 5 | 1 | 1 | 0 | 0 | 0 | 0 | 0 | 0 |
| FRIT 5 | 1 | 2 | 0 | 0 | 0 | 0 | 0 | 0 |
| FRIT 5 | 1 | 3 | 0 | 0 | 0 | 0 | 0 | 0 |
| FRIT 5 | 2 | 1 | 0 | 0 | 0 | 0 | 0 | 0 |
| FRIT 5 | 2 | 2 | 0 | 0 | 0 | 0 | 0 | 0 |
| FRIT 5 | 2 | 3 | 0 | 0 | 0 | 0 | 0 | 0 |
| FRIT 5 | 4 | 1 | 0 | 0 | 0 | 0 | 0 | 0 |
| | | | | | | | | |
| FRIT 5 | 4 | 2 | 0 | 0 | 0 | 0 | 0 | 0 |
| FRIT 5 | 4 | 3 | 0 | 0 | 0 | 0 | 0 | 0 |
| FRIT 6 | 1 | 1 | 0 | 0 | 0 | 0 | 0 | 0 |
| FRIT 6 | 1 | 2 | 0 | 0 | 0 | 0 | 0 | 0 |
| FRIT 6 | 1 | 3 | 0 | 0 | 0 | 0 | 0 | 0 |
| FRIT 6 | 2 | 1 | 0 | 0 | 0 | 0 | 0 | 0 |
| FRIT 6 | 2 | 2 | 0 | 0 | 0 | 0 | 0 | 0 |
| FRIT 6 | 2 | 3 | 0 | 0 | 0 | 0 | 0 | 0 |
| FRIT 6 | 4 | 1 | 0 | 0 | 0 | 0 | 0 | 0 |
| FRIT 6 | 4 | 2 | 0 | 0 | 0 | 0 | 0 | 0 |
| FRIT 6 | 4 | 3 | 0 | 0 | 0 | 0 | 0 | 0 |
| FRIT 7 | 1 | 1 | 0 | 0 | 0 | 0 | 0 | 0 |
| FRIT 7 | 1 | 2 | 0 | 0 | 0 | 0 | 0 | 0 |
| FRIT 7 | 1 | 3 | 0 | 0 | 0 | 0 | 0 | 0 |
| FRIT 7 | 2 | 1 | 0 | 0 | 0 | 0 | 0 | 0 |
| FRIT 7 | 2 | 2 | 0 | 0 | 0 | 0 | 0 | 0 |
| FRIT 7 | 2 | 3 | 0 | 0 | 0 | 0 | 0 | 0 |
| FRIT 7 | 4 | 1 | 0 | 0 | 0 | 0 | 0 | 0 |
| FRIT 7 | 4 | 2 | 0 | 0 | 0 | 0 | 0 | 0 |
| FRIT 7 | 4 | 3 | 0 | 0 | 0 | 0 | 0 | 0 |
| Seq | 0.02 | 1 | 0.015 | 0.040 | 0.008 | 0.009 | 0.008 | 0.005 |
| Seq | 0.02 | 2 | 0.360 | 0.168 | 0.041 | 0.005 | 0.006 | 0.001 |
| Seq | 0.02 | 3 | 0.238 | 0.121 | 0.037 | 0.029 | 0.010 | 0.001 |
| Seq | 0.04 | 1 | 0.129 | 0.243 | 0.112 | 0.033 | 0.045 | 0.006 |
| Seq | 0.04 | 2 | 0.073 | 0.069 | 0.036 | 0.039 | 0.037 | 0.005 |
| Seq | 0.04 | 3 | 0.045 | 0.366 | 0.143 | 0.024 | 0.023 | 0.003 |
| Seq | 0.08 | 1 | 0.065 | 0.802 | 0.249 | 0.043 | 0.042 | 0.006 |
| Seq | 0.08 | 2 | 0.193 | 0.161 | 0.080 | 0.066 | 0.094 | 0.010 |
| Seq | 0.08 | 3 | 0.061 | 0.096 | 0.049 | 0.070 | 0.120 | 0.036 |
| Ctrl | 0 | 1 | 0 | 0 | 0 | 0 | 0 | 0 |
| Ctrl | 0 | 2 | 0 | 0 | 0 | 0 | 0 | 0 |
| Ctrl | 0 | 3 | 0 | 0 | 0 | 0 | 0 | 0 |
| Ctrl | 0 | 4 | 0 | 0 | 0 | 0 | 0 | 0 |

Such results appear to show the low solubility of the frits with high iron content, thus ruling out possible losses of iron following, for example, intense rainfall. Such aspect, therefore, appear to rule out possible consequences both environmental, in that the risk of pollution of the aquifers would appear to be equal to zero, and economic, in that the positive effect of such product would not be exhausted in a single growing season.

Therefore, for the soils treated with the frits 5-6-7, the high available-iron content and the absence of iron in the leaching waters indicate that such materials are slow-release, thus enabling the minerals in the soil to adsorb such iron into their surfaces (exchangeable iron) and to be assimilated by the plants, thus preventing needless losses into the aquifer.

Through different types of extraction on the soils treated with the frits, it was possible to analyze and distinguish the available iron, soluble iron, exchangeable iron and the iron present in the easily-degradable amorphous compounds. It emerged that the frits are rich in amorphous iron, which is an important source of the microelement in that these compounds with low crystalline order are easily degradable by radical exudates

### EXAMPLE 3. Frits for treating biotic diseases. (FRITS 9-11 are not according to the use of the present invention as claimed)

| | FRIT 8 | FRIT 9 | FRIT 10 | FRIT 11 |
|---|---|---|---|---|
| B₂O₅ | - | 5% | 5% | 10% |
| Na₂O | - | - | - | 3% |
| MgO | 3% | 7% | 10% | 3,00% |
| SiO₂ | 27% | 15% | 15% | 45% |
| P₂O₅ | 20% | 35% | 35% | 10% |
| K₂O | 10% | 25% | 10% | 10% |
| CaO | 10% | 10% | 10% | 9% |
| ZnO | 30% | 3% | 15% | 10% |
| Solubility in water after 28 days | 12% | 35% | 20% | 8% |
| pH value after 28 days | 5.9 | 6.5 | 6 | 4,80% |

The frits for treating biotic diseases given above also have very different solubility in water after 28 days and they give different pH values to the soil where they are applied.

The goal of this type of frits is to use them as resistance inductors, i.e. capable of generating a physiological response in the plant, which makes it more resistant to subsequent stress of a biotic or abiotic nature.

In order to assess the protection induced by such frits, they were mixed in standard doses with the soil into which seedlings of tomato, geranium and actinidia were transplanted; non-treated soil was used as a reference, and for comparison both a commercial resistance inductor, BION (Acibenzolar-S-methyl), and zinc phosphate were used, since the literature indicates that salts formed by phosphates or phosphites are widely used as resistance inductors.

Then the pathogens, *Pseudomonas syringae* and *Botrytis cinerea*, responsible respectively for bacterial speck and gray mold, was inoculated in the seedlings.

The frits for treating biotic diseases were tested initially on geranium plants (*Pelargonium hortorum*) inoculated with gray mold (*Botrytis cinerea*) in order to observe the phytotoxicity of such frits.

Subsequently the average percentage of lesions and therefore the percentage of protection on the infected surface, i.e. the area occupied by the lesions, were calculated; the aerial part of the plants was also chemically analyzed.

Furthermore, by way of fluorescent microscopy it was possible to assess the opposition of the callose to attack from pathogens; callose is a polysaccharide of plant origin synthesized by the plant to strengthen the cellular walls and reduce the possibility of penetration; it therefore has a decisive role in the foliar resistance to attacks from pathogens and it is used as a marker of resistance.

From the results obtained, it emerged that in particular the frit indicated with number 8 is effective in the treatment of biotic diseases in the experiment.

In particular in tomato plants treated with the frit 8 to protect them from bacterial speck, the number of lesions is lower with respect to the control and BION, but not statistically meaningful with respect to zinc phosphate.

| | **% average Infected surface** | **% protection Infected surface** | **Number of lesions (Average replications)** |
|---|---|---|---|
| **Treatment** | | | |
| | | | |
| Control | 0.776 b | - | 46.9 c |
| Frit 8 | 0.124 a | 84.03 | 8.3 a |
| Zinc phosphate | 0.104 a | 86.60 | 14 ab |
| BION | 6.8 c | No protection | 24.6 b |

The chemical analyses on the aerial part of the seedling show, for the samples treated with the frit 8, a presence of zinc four times higher than the other samples and a value of phosphor slightly higher than the control, zinc phosphate and BION; it seems that the chemical element that induces resistance in the seedling is zinc.

| **Treatment** | **Mg (g/Kg)** | **Zn (g/Kg)** | **Na (g/Kg)** | **P (g/Kg)** | **K (g/Kg)** |
|---|---|---|---|---|---|
| Control | 0.25 | 0.07 | 7.1 | 5.45 | 0.25 |
| FRIT 8 | 0.24 | **0.28** | 8.1 | 7 | 0.2 |
| Zinc phosphate | 0.24 | 0.08 | 9 | 6.4 | 0.16 |
| BION | 0.16 | 0.07 | 8.2 | 4.8 | 1.2 |

At 48h after the treatment, in the plants treated, the apposition of callose is significantly higher than that observed in the plants that were not treated. That notwithstanding, the apposition observed in the plants treated with the frit 8 and zinc phosphate does not significantly differ from that observed in the plants treated with BION.

In practice it has been found that the invention fully achieves the set aim in that it provides a plant protection product for treating plants that makes it possible to suitably modify and control the kinetics of releasing the active ingredients into the soil. With proper selection of the compounds of the frits as used according to the invention, it is possible to for example ensure that only a single treatment with the frits over the entire vegetative time of the plants is necessary.

The use of the frits of the invention furthermore can correct any deficiencies of the soil, in terms both of chemism and of pH values.

The process for preparing the frits according to the invention, furthermore, is low cost and ecological and the final product is safe and reliable. The frits of the present invention can be used both in the agriculture sector and in the nursery sector.

The frits with plant protection action described herein, as well as the process for their preparation and the uses for treating plant diseases, conceived as described herein, are susceptible of numerous modifications and variations, all of which are within the scope of the appended claims. Moreover, all the details may be substituted by other, equivalent elements, the correspondence of which is known to the person skilled in the art.

## Claims

1. Use of a frit for treating biotic diseases selected from the group consisting of: bacterial speck, bacterial canker, pith necrosis, bacterial spot, downy mildew, early blight, Septoria spot, Verticillium wilt, Pseudomonas spot, Xanthomonas spot, leaf spot, rot, bacterial necrosis, and mange wherein said frit is **characterized in that** it comprises:
(i) from 20% to 70% by weight on the weight of the frit of one or more network-forming compounds selected from the group consisting of: diphosphorus pentoxide (P₂O₅), silicon dioxide (SiO₂), diboron trioxide (B₂O₃), and sulfur trioxide (SO₃);
(ii) from 10% to 55% by weight on the weight of the frit of one or more network-modifying compounds selected from the group consisting of: aluminum oxide (Al₂O₃), magnesium oxide (MgO), calcium oxide (CaO), sodium oxide (Na₂O), potassium oxide (K₂O), and calcium fluoride (CaF₂);
(iii) from 20% to 60% by weight on the weight of the frit of one active compound consisting of zinc oxide (ZnO).

2. The use according to claim 1, wherein the quantity of the one or more network-forming compounds in the frit is comprised between 35% and 70% by weight on the weight of the frit.

3. The use according to claim 2, wherein the quantity of the one or more network-forming compounds in the frit is comprised between 20% and 60% by weight on the weight of the frit.

4. The use according to any of the preceding claims, wherein the quantity of the one or more network-modifying compounds in the frit is comprised between 20% and 55% by weight on the weight of the frit.

5. The use according to any of claims 1-3, wherein the quantity of the one or more network-modifying compounds in the frit is comprised between 10% and 30% by weight on the weight of the frit.

6. The use according to any of the preceding claims,wherein the frit further comprises one or more network-supporting compounds selected from the group consisting of: zirconium dioxide (ZrO₂), titanium dioxide (TiO₂), tin dioxide (SnO₂), cerium dioxide (CeO₂), yttrium oxide (Y₂O₃), lanthanum oxide (La₂O₃), divanadium pentoxide (V₂O₅), selenium dioxide (SeO₂) and antimony trioxide (Sb₂O₃).

7. The use according to claim 6, wherein the quantity of the one or more network-supporting compounds in the frit is lower than or equal to 3% by weight on the weight of the frit.

8. The use according to any one of claims 1-7, where the frit or the composition comprising the frit is applied to soil where plants affected by biotic diseases are grown.

## Patentansprüche

1. Verwendung einer Fritte zur Behandlung biotischer Erkrankungen, gewählt aus der Gruppe bestehend aus bakteriellen Flecken, Ringfäule, Marknekrose, bakteriellen Punkten, falschem Mehltau, früher Fäule, Septoria-Fleckenkrankheit, Verticillium-Welke, Pseudomonas-Fleckenkrankheit, Xanthomonas-Fleckenkrankheit, Blattfleckenkrankheit, Fäulnis, bakterieller Nekrose und Räude, wobei die Fritte **dadurch gekennzeichnet ist, dass** sie Folgendes umfasst:
(i) 20 bis 70 Gewichtsprozent (des Gewichts der Fritte) einer oder mehrerer netzwerkbildender Verbindungen, gewählt aus der Gruppe bestehend aus Diphosphorpentaoxid (P₂O₅), Siliziumdioxid (SiO₂), Dibortrioxid (B₂O₃) und Schwefeltrioxid (SOs) ;
(ii) 10 bis 55 Gewichtsprozent (des Gewichts der Fritte) einer oder mehrerer netzwerkändernder Verbindungen, gewählt aus der Gruppe bestehend aus Aluminiumoxid (Al₂O₃), Magnesiumoxid (MgO), Kalziumoxid (CaO), Natriumoxid (Na₂O), Kaliumoxid (K₂O) und Kalziumfluorid (CaF₂);
(iii) 20 bis 60 Gewichtsprozent (des Gewichts der Fritte) einer aktiven Verbindung, die aus Zinkoxid (ZnO) besteht.

2. Die Verwendung gemäß Anspruch 1, wobei die Menge der einen oder mehreren netzwerkbildenden Verbindungen in der Fritte zwischen 35 Gewichtsprozent und 70 Gewichtsprozent des Gewichts der Fritte beträgt.

3. Die Verwendung gemäß Anspruch 2, wobei die Menge der einen oder mehreren netzwerkbildenden Verbindungen in der Fritte zwischen 20 und 60 Gewichtsprozent des Gewichts der Fritte beträgt.

4. Die Verwendung gemäß einem beliebigen der obigen Ansprüche, wobei die Menge der einen oder mehreren netzwerkändernden Verbindungen in der Fritte zwischen 20 und 55 Gewichtsprozent des Gewichts der Fritte beträgt.

5. Die Verwendung gemäß einem beliebigen der Ansprüche 1-3, wobei die Menge der einen oder mehreren netzwerkändernden Verbindungen in der Fritte zwischen 10 und 30 Gewichtsprozent des Gewichts der Fritte beträgt.

6. Die Verwendung gemäß einem beliebigen der obigen Ansprüche, wobei die Fritte weiter eine oder mehrere netzwerktragende Verbindungen umfasst, gewählt aus der Gruppe bestehend aus Zirkondioxid (ZrO₂) , Titandioxid (TiO₂), Zinndioxid (SnO₂), Cerdioxid (CeO₂), Yttriumoxid (Y₂O₃), Lanthanoxid (La₂O₃), Divanadiumpentoxid (V₂O₅), Selendioxid (SeO₂) und Antimontrioxid (Sb₂O₃).

7. Die Verwendung gemäß Anspruch 6, wobei die Menge der einen oder mehreren netzwerktragenden Verbindungen in der Fritte höchstens 3 Gewichtsprozent des Gewichts der Fritte beträgt.

8. Die Verwendung gemäß einem beliebigen der Ansprüche 1-7, wobei die Fritte oder die Zusammensetzung, die die Fritte umfasst, bei Erde angewandt wird, wo von biotischen Erkrankungen betroffene Pflanzen angebaut werden.

## Revendications

1. Utilisation d'une fritte pour traiter des maladies biotiques choisies dans le groupe constitué par : une moucheture bactérienne, un chancre bactérien, une nécrose de la moelle, des taches bactériennes, un mildiou, une alternariose, des taches de septoriose, une verticilliose, des taches de Pseudomonas, des taches de Xanthomonas, une tacheture foliaire, une pourriture, une nécrose bactérienne, et une gale, dans laquelle ladite fritte est **caractérisée en ce qu'**elle comprend :
(i) 20 % à 70 % en poids, par rapport au poids de la fritte, d'un ou plusieurs composés formant un réseau choisis dans le groupe constitué par : le pentoxyde de diphosphore (P₂O₅), le dioxyde de silicium (SiO₂), le trioxyde de dibore (B₂O₃), et le trioxyde de soufre (SOs) ;
(ii) 10 % à 55 % en poids, par rapport au poids de la fritte, d'un ou plusieurs composés modificateurs de réseau choisis dans le groupe constitué par : l'oxyde d'aluminium (Al₂O₃), l'oxyde de magnésium (MgO), l'oxyde de calcium (CaO), l'oxyde de sodium (Na₂O), l'oxyde de potassium (K₂O), et le fluorure de calcium (CaF₂) ;
(iii) 20 % à 60 % en poids, par rapport au poids de la fritte, d'un composé actif consistant en oxyde de zinc (ZnO).

2. Utilisation selon la revendication 1, dans laquelle la quantité du ou des composés formant un réseau dans la fritte est comprise entre 35 % et 70 % en poids par rapport au poids de la fritte.

3. Utilisation selon la revendication 2, dans laquelle la quantité du ou des composés formant un réseau dans la fritte est comprise entre 20 % et 60 % en poids par rapport au poids de la fritte.

4. Utilisation selon l'une quelconque des revendications précédentes, dans laquelle la quantité du ou des composés modificateurs de réseau dans la fritte est comprise entre 20 % et 55 % en poids par rapport au poids de la fritte.

5. Utilisation selon l'une quelconque des revendications 1 à 3, dans laquelle la quantité du ou des composés modificateurs de réseau dans la fritte est comprise entre 10 et 30 % en poids par rapport au poids de la fritte.

6. Utilisation selon l'une quelconque des revendications précédentes, dans laquelle la fritte comprend en outre un ou plusieurs composés soutenant un réseau choisis dans le groupe constitué par : le dioxyde de zirconium (ZrO₂), le dioxyde de titane (TiO₂), le dioxyde d'étain (SnO₂), le dioxyde de cérium (CeO₂), l'oxyde d'yttrium (Y₂O₃), l'oxyde de lanthane (La₂O₃), le pentoxyde de divanadium (V₂O₅), le dioxyde de sélénium (SeO₂), et le trioxyde d'antimoine (Sb₂O₃).

7. Utilisation selon la revendication 6, dans laquelle la quantité du ou des composés soutenant un réseau dans la fritte est inférieure ou égale à 3 % en poids par rapport au poids de la fritte.

8. Utilisation selon l'une quelconque des revendications 1 à 7, dans laquelle la fritte ou la composition comprenant la fritte est appliquée au sol où poussent des plantes affectées par des maladies biotiques.
